# EUROPEAN PATENT APPLICATION

(11) **EP 4 815 131 A1**
(43) Date of publication of application: **30.09.2026**
(21) Application number: 26154488.6
(22) Date of filing: 27.01.2026
(51) Int. Cl.: H01M 50/204, H01M 50/367

(54) **SMOKE VENT STRUCTURE**

(30) Priority: 26.03.2025 JP 2025052471
(71) Applicant: Toyota Jidosha Kabushiki Kaisha, Toyota-shi, Aichi-ken 471-8571 (JP)
(72) Inventor: KAWAMOTO, Naoya, Toyota-shi, 471-8571 (JP); TAKAHASHI, Isao, Toyota-shi, 471-8571 (JP)
(74) Representative: D Young & Co LLP

(57) **Abstract**

The smoke vent passage includes: a first passage member that defines a first smoke vent passage, the first smoke vent passage constituting part of a smoke vent passage through which smoke generated in a battery cell flows; and a second passage member that defines a second smoke vent passage, the second smoke vent passage bypassing part of the first smoke vent passage and having, in a cross section perpendicular to an extending direction, a cross-sectional shape different from a cross-sectional shape of the first smoke vent passage.

## Description

### BACKGROUND OF THE INVENTION

### 1. Field of the Invention

The present disclosure relates to smoke vent structures.

### 2. Description of Related Art

Japanese Patent No. 7259673 (JP 7259673 B) describes a battery pack including a battery module including a plurality of battery cells, a cooler that cools the battery cells, and a smoke vent passage through which gas or smoke released from the battery cells flows.

### SUMMARY OF THE INVENTION

When solid matter generated along with smoke enter a smoke vent passage that guides smoke generated within a battery pack, the smoke flow in the passage can be obstructed.

An object of the present disclosure is to suppress obstruction of smoke flow caused by solid matter generated along with smoke from a battery cell.

A smoke vent structure according to a first aspect includes: a first passage member that defines a first smoke vent passage, the first smoke vent passage constituting part of a smoke vent passage through which smoke generated in a battery cell flows; and a second passage member that defines a second smoke vent passage, the second smoke vent passage bypassing part of the first smoke vent passage and having, in a cross section perpendicular to an extending direction, a cross-sectional shape different from a cross-sectional shape of the first smoke vent passage.

In the smoke vent structure of the first aspect, smoke generated in the battery cell flows through the first smoke vent passage defined by the first passage member. The smoke vent structure also includes the second passage member that defines the second smoke vent passage. The second smoke vent passage bypasses part of the first smoke vent passage. Accordingly, in a region where the second smoke vent passage is provided, a large flow cross-sectional area of the smoke vent passage is ensured.

The second smoke vent passage defined by the second passage member has, in a cross section perpendicular to the extending direction, a cross-sectional shape different from that of the first smoke vent passage defined by the first passage member. Accordingly, even if the smoke flow in one of first and second passages is obstructed by solid matter generated along with smoke from a battery cell, the smoke flow in the other passage is less likely to be obstructed. That is, obstruction of smoke flow due to solid matter generated along with smoke from a battery cell can be suppressed in at least one of the first and second passages.

According to a second aspect, in the smoke vent structure of the first aspect, a plurality of the battery cells is arranged in a plurality of rows, the first passage member is disposed below the battery cells and parallel with the rows, and the second passage member is disposed between the rows.

In the smoke vent structure of the second aspect, the first passage is defined below the battery cells, allowing smoke to flow therethrough. The second passage can be disposed by effectively utilizing the space between the rows of battery cells.

According to a third aspect, in the smoke vent structure of the first or second aspect, the first smoke vent passage has, in a cross section perpendicular to an extending direction, a shape in which a cross-sectional height is greater than a cross-sectional width.

In the smoke vent structure of the third aspect, since the first smoke vent passage has a flattened cross-sectional shape, a sufficient cross-sectional area for smoke flow can be ensured with a low height.

According to a fourth aspect, in the smoke vent structure of the third aspect, the second smoke vent passage has, in a cross section perpendicular to the extending direction, a cross-sectional height greater than the cross-sectional height of the first smoke vent passage.

In the smoke vent structure of the fourth aspect, the second smoke vent passage has a greater cross-sectional height than the first smoke vent passage. Therefore, even if the first smoke vent passage becomes clogged with solid matter, the second smoke vent passage is less likely to become clogged, thereby providing a structure less susceptible to clogging with solid matter.

In a fifth aspect, in the smoke vent structure of the third or fourth aspect, the second smoke vent passage has, in a cross section perpendicular to the extending direction, a cross-sectional width narrower than the cross-sectional width of the first smoke vent passage.

In the smoke vent structure of the fifth aspect, since the second smoke vent passage has a smaller cross-sectional width than the first smoke vent passage, the second smoke vent passage can be arranged in a narrow space between battery modules. Furthermore, since the second smoke vent passage has a smaller width and a greater height than the first smoke vent passage, the cross-sectional area of the second smoke vent passage does not become excessively large or small, thereby reducing the difference in cross-sectional area between the first and second smoke vent passages.

With the present disclosure, a sufficiently large flow cross-sectional area can be ensured for a smoke vent passage through which smoke generated in a battery pack flows.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a plan view showing a smoke vent structure according to a first embodiment;
FIG. 2 is a perspective view showing the smoke vent structure according to the first embodiment;
FIG. 3 is a cross-sectional view of the smoke vent structure according to the first embodiment, taken along the vehicle front-rear direction;
FIG. 4 is a cross-sectional view of the smoke vent structure according to the first embodiment, taken along the vehicle width direction; and
FIG. 5 is an enlarged cross-sectional view of the smoke vent structure according to the first embodiment, taken along the vehicle width direction.

### DETAILED DESCRIPTION OF EMBODIMENTS

A smoke vent structure of a first embodiment of the present disclosure will be described below with reference to the drawings. The following description focuses on aspects relevant to the technology of the present disclosure, and portions not described in detail are assumed to be based on known techniques. Identical or equivalent components are denoted by the same or similar signs throughout the drawings, and repetitive description will be omitted. When multiple identical or equivalent components are included in the drawings, only some of them may be denoted by signs for clarity. Arrows FR, UP, and LH in the drawings respectively indicate the forward, upward, and leftward directions of a vehicle 10. In the following description, unless otherwise specified, the terms "front," "rear," "upper," "lower," "right," and "left" respectively refer to the front and rear sides in the vehicle front-rear direction, the upper and lower sides in the vehicle up-down direction, and the right and left sides in the vehicle width direction (left-right direction).

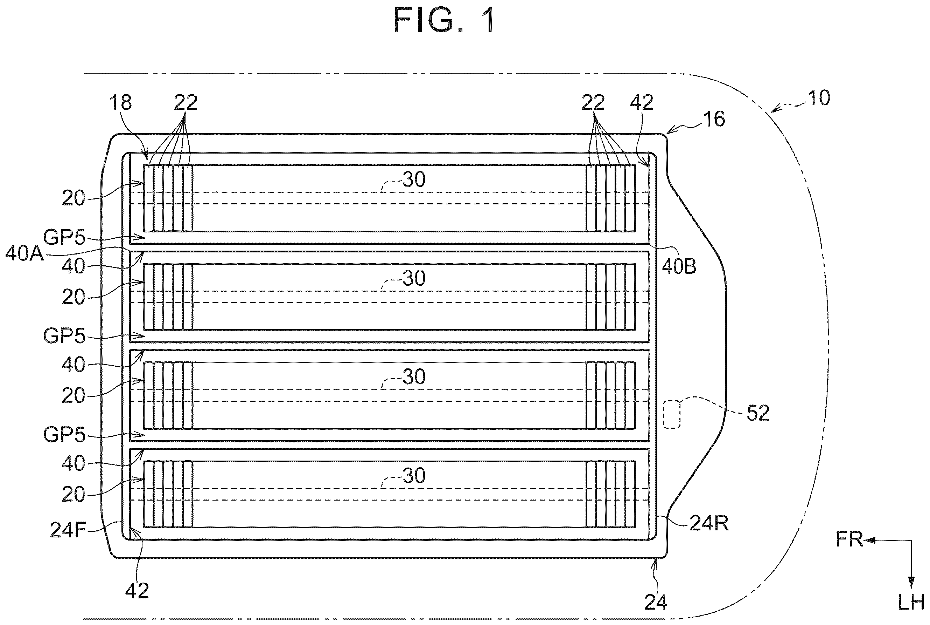

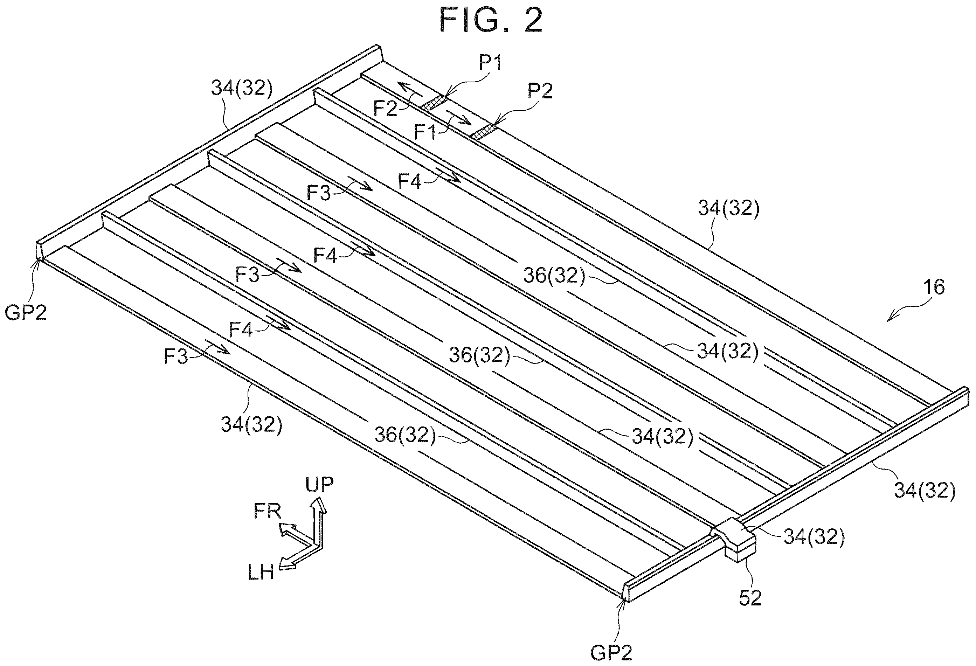

FIG. 1 is a schematic plan view showing part of a vehicle 10 equipped with a smoke vent structure 16 according to the first embodiment. FIG. 2 is a perspective view showing a first smoke vent passage 34 and a second smoke vent passage 36 that constitute the smoke vent structure 16.

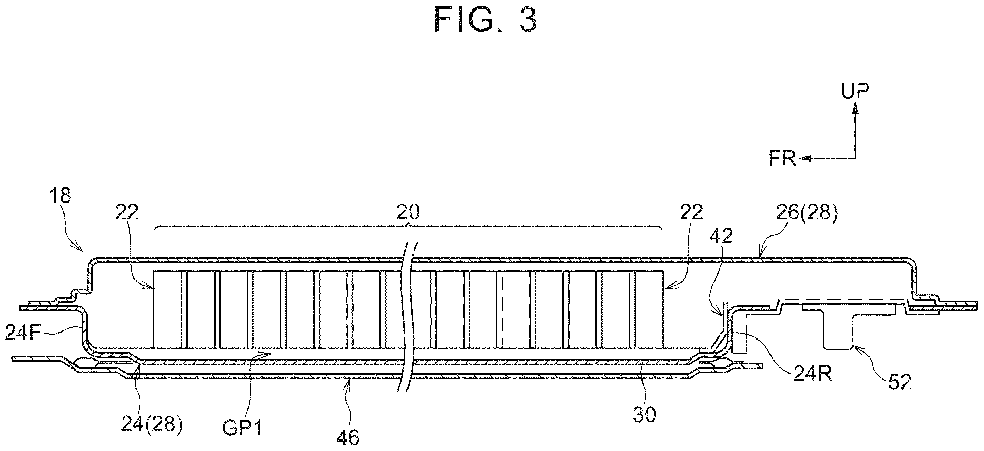

As shown in FIG. 1, a battery pack 18 is mounted on the vehicle 10. As also shown in FIG. 3, the battery pack 18 includes a plurality (four in the present embodiment) of battery modules 20. The battery modules 20 are arranged side by side in the vehicle width direction. A gap GP5 is formed between each pair of adjacent battery modules 20. In the present embodiment, since there are four battery modules 20, three gaps GP5 are formed between the battery modules 20.

Each battery module 20 includes a plurality of battery cells 22. In each battery module 20, the battery cells 22 are arranged side by side in the vehicle front-rear direction. That is, in the battery pack 18, the battery modules 20 each including a plurality of battery cells 22 arranged side by side in the vehicle front-rear direction are arranged in the vehicle width direction.

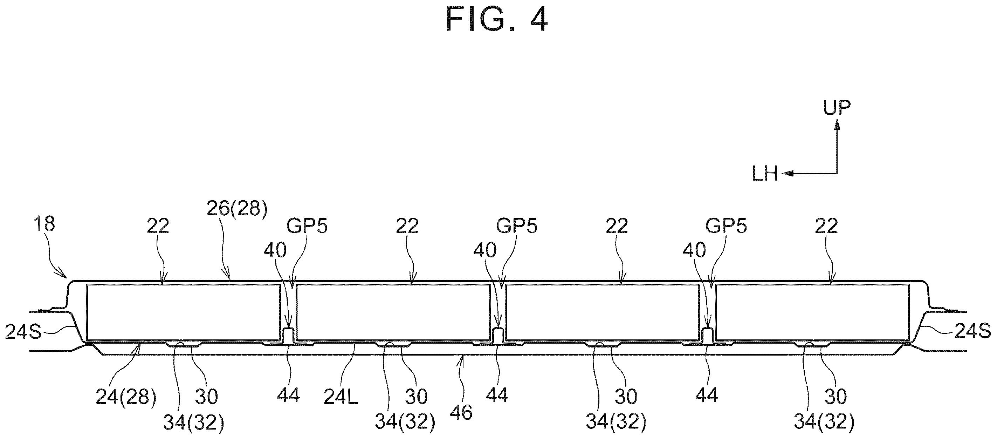

As shown in FIGS. 3 and 4, the battery pack 18 includes a lower case 24 and an upper cover 26. The lower case 24 is a box-shaped member configured to house the battery modules 20, and includes a bottom plate 24L, a front plate 24F, a rear plate 24R, and a pair of right and left side plates 24S. The bottom plate 24L is a plate portion that supports the battery modules 20 from below. The front plate 24F and the rear plate 24R are plate portions that respectively extend upward from the front and rear sides of the bottom plate 24L. The side plates 24S are plate portions that extend upward from both sides of the bottom plate 24L in the vehicle width direction. The lower case 24 has an open top.

The upper cover 26 is a lid-shaped member that closes the upper opening of the lower case 24. The lower case 24 and the upper cover 26 are joined together along their peripheries to form a battery case 28. The battery modules 20 each including the battery cells 22 are housed side by side in the vehicle width direction in the internal space of the battery case 28.

A shear panel 46 is disposed below the battery pack 18. In the present embodiment, the shear panel 46 covers the lower surface of the battery pack 18 and protects the battery modules 20 from foreign objects etc. from the road surface.

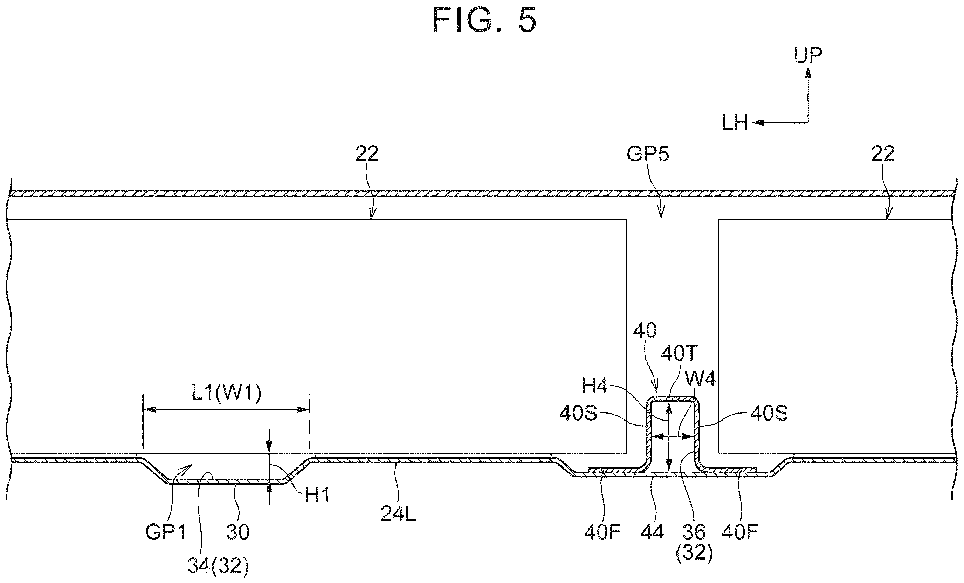

As shown in FIG. 5, the bottom plate 24L of the lower case 24 is bonded to the lower surfaces of the respective battery cells 22 by an adhesive. The bottom plate 24L has a plurality of downwardly protruding portions 30 (the same in number as the battery modules 20). Each downwardly protruding portion 30 protrudes downward at the center position of the corresponding battery module 20 in the vehicle width direction. In each downwardly protruding portion 30, the lower case 24 is partially separated from the lower surfaces of the battery cells 22, thereby forming a gap GP1. Each downwardly protruding portion 30 is formed for the corresponding battery module 20 so as to extend in the vehicle front-rear direction, that is, in the direction in which the battery cells 22 are arranged. The length of each downwardly protruding portion 30 in the vehicle front-rear direction is approximately the same as the length of the battery module 20 in vehicle front-rear direction. Each downwardly protruding portion 30 extends continuously from a position near the front plate 24F to a position near the rear plate 24R.

Since each downwardly protruding portion 30 is spaced apart from the lower surfaces of the battery cells 22, the gap GP1 formed therebetween constitutes part of a first smoke vent passage 34. In each battery cell 22, when smoke-containing gas (hereinafter simply referred to as "smoke") is generated due to some cause, the smoke is discharged from the central region in the vehicle width direction on the lower surface of the battery cell 22. Accordingly, the smoke generated in the battery cell 22 flows into the gap GP1 formed by the downwardly protruding portion 30. The lower case 24 having the downwardly protruding portions 30 is an example of a first passage member that constitutes the first smoke vent passage 34.

As shown in FIG. 5, each downwardly protruding portion 30 has, in cross section taken in a lateral direction perpendicular to its extending direction (that is, in the vehicle width direction), a flattened trapezoidal shape in which the upper side is longer than the lower side. The height H1 of this trapezoidal shape is smaller than the length L1 of the upper side. The length L1 of the upper side is substantially equal to the width W1 of the downwardly protruding portion 30. Accordingly, each downwardly protruding portion 30 has a shape in which the height H1 is smaller than the width W1, that is, a trapezoidal shape that is short in the lateral direction perpendicular to its extending direction (that is, in the vehicle width direction).

As shown in FIG. 2, a first smoke vent passage 34 is also formed on each of the front and rear sides of the battery pack 18 in the vehicle front-rear direction by the first passage member. These first smoke vent passages 34 extend in the vehicle width direction and respectively form gaps GP2 that communicate with the gaps GP1.

As shown in FIGS. 1, 4, and 5, a reinforcing member 40 is disposed in each of the gaps GP5 between the battery modules 20. As shown in FIG. 5, in a cross section taken in the vehicle width direction, each reinforcing member 40 includes an upper plate 40T, side plates 40S, and flange plates 40F. The upper plate 40T is a plate portion forming the upper part of the reinforcing member 40. The side plates 40S extend downward from both sides of the upper plate 40T in the vehicle width direction, forming a pair of plate portions spaced apart from each other in the vehicle width direction. The flange plates 40F are flanges that extend outward in the vehicle width direction from the respective side plates 40S. Accordingly, each reinforcing member 40 has a substantially hat-shaped cross section that is open on the lower side.

As shown in FIG. 1, each reinforcing member 40 has a length that extends to positions near the front plate 24F and the rear plate 24R of the lower case 24. Accordingly, each reinforcing member 40 extends along substantially the entire length of the corresponding battery module 20 in the vehicle front-rear direction. Each reinforcing member 40 is open at its front and rear ends 40A, 40B in its longitudinal direction. The front end 40A (see FIG. 1) and the rear end 40B of each reinforcing member 40 are respectively joined to the front plate 24F and rear plate 24R of the lower case 24 via joining members 42. The reinforcing members 40 thus reinforces the battery pack 18.

As shown in FIG. 5, a cell base 44 is formed in the bottom plate 24L of the lower case 24 at positions corresponding to the reinforcing members 40. The cell base 44 is a portion of the bottom plate 24L of the lower case 24 that is formed to protrude downward at the positions corresponding to the reinforcing members 40. The cell base 44 is joined to the flange plates 40F of the reinforcing members 40 and closes the open lower sides of the reinforcing members 40. In contrast, the front end 40A and rear end 40B of each reinforcing member 40 are open (see FIG. 1). Each portion having a closed cross-sectional shape (that is, a shape having a closed cross section in the vehicle width direction) formed by the reinforcing member 40 and the cell base 44 communicates with the corresponding first smoke vent passage 34. Accordingly, the closed cross-sectional shape formed by the reinforcing member 40 and the cell base 44 also constitutes part of the second smoke vent passage 36. That is, the reinforcing member 40 and the cell base 44 are an example of a second passage member. In the present embodiment, part of the lower case 24 also serves as the cell base 44. That is, the lower case 24 that also functions as the cell base 44 extends across the reinforcing members 40. In other words, for the reinforcing members 40, the cell base 44 is integrally provided by the lower case 24, thereby forming the second smoke vent passage 36.

As shown in FIG. 5, each reinforcing member 40 has a shape whose height H4 is greater than its width W4. Therefore, the second smoke vent passage 36 also has, in a cross section perpendicular to its extending direction, a rectangular shape whose long side lies in the up-down direction. In particular, the height H4 of the reinforcing member 40 is greater than the height H1 of the downwardly protruding portion 30. The width W4 of the reinforcing member 40 is smaller than the width W1 of the downwardly protruding portion 30. The ratio of height H4 to width W4 of the reinforcing member 40 is closer to 1 than the ratio of cross-sectional height H1 to width W1 of the downwardly protruding portion 30. In other words, the portion of the second smoke vent passage 36 formed by the reinforcing member 40 has a cross-sectional shape closer to a square than the portion of the first smoke vent passage 34 formed by the downwardly protruding portion 30.

As described above, the portion of the first smoke vent passage 34 formed by the downwardly protruding portion 30 has a trapezoidal shape that is short in the up-down direction. That is, the first smoke vent passage 34 and the second smoke vent passage 36 differ in their cross-sectional shapes taken in a direction perpendicular to their longitudinal direction.

The second smoke vent passage 36 formed by the reinforcing member 40 and the cell base 44 communicates with the first smoke vent passage 34 at the front and rear sides of the vehicle (the gaps GP2). As shown in FIG. 2, part of the first smoke vent passage 34 is bypassed by the second smoke vent passage 36, and the first and second smoke vent passages 34, 36 constitute a smoke vent passage 32.

A smoke vent valve 52 is provided in the first smoke vent passage 34. The smoke vent valve 52 is configured to open when the internal pressure of the first smoke vent passage 34 becomes higher than the air pressure outside the first smoke vent passage 34 by at least a predetermined amount. That is, when smoke flows into the first smoke vent passage 34 and the internal pressure becomes higher than the external air pressure by at least the predetermined amount, the smoke vent valve 52 opens, allowing gas inside the first smoke vent passage 34 to be discharged to the outside.

Next, the operation of the present embodiment will be described.

In the vehicle 10 to which the smoke vent structure 16 of the present embodiment is applied, each battery module 20 is formed from a plurality of battery cells 22. In other words, the battery module 20 integrates the battery cells 22 into a single unit.

The battery cells 22 are arranged in the vehicle front-rear direction within each battery module 20, and the battery modules 20 are arranged in the vehicle width direction. This makes it possible to efficiently arrange the battery cells 22 in both the vehicle front-rear direction and the vehicle width direction. In particular, since the battery cells 22 are arranged in the vehicle front-rear direction in each battery module 20, the number of battery cells 22 per row can be increased compared with a configuration in which the battery cells 22 are arranged in the vehicle width direction.

In each battery cell 22, smoke does not normally occur during normal operation. However, if smoke is generated for some reason, the smoke is discharged from the central portion, in the vehicle width direction, of the lower surface of the battery cell 22. The smoke then flows into the first smoke vent passage 34 that is defined by the gap GP1 between the downwardly protruding portion 30 of the lower case 24 and the lower surface of the battery cell 22. The smoke further travels through the first smoke vent passage 34 toward the smoke vent valve 52. When the internal pressure of the first smoke vent passage 34 becomes higher than the external pressure, the smoke is discharged to the outside through the smoke vent valve 52.

The smoke vent structure 16 of the present embodiment includes the second smoke vent passage 36 in addition to the first smoke vent passage 34. The second smoke vent passage 36 bypasses part of the first smoke vent passage 34 between the battery cells 22 and the smoke vent valve 52. In the regions where the second smoke vent passage 36 is provided, a larger cross-sectional area is ensured for the passage through which smoke flows, compared with a configuration without the second smoke vent passage 36.

Furthermore, the second smoke vent passage 36 bypasses part of the first smoke vent passage 34. Therefore, even if the first smoke vent passage 34 becomes clogged with foreign matter, the influence of the clogging on the movement of smoke toward the smoke vent valve 52. For example, as shown in FIG. 2, consider a case where smoke is generated at a smoke generation point P1. In this case, smoke flows in the directions indicated by arrows F1, F2 in the first smoke vent passage 34 near the smoke generation point P1. In particular, since the smoke flow path indicated by arrow F1 has a short distance to the smoke vent valve 52 and low flow resistance, smoke readily flows through it. However, if the first smoke vent passage 34 becomes blocked at a blockage point P2, the flow indicated by arrow F1 ceases. Even in this case, a smoke flow indicated by arrow F2 occurs in the unblocked portion of the first smoke vent passage 34, and the smoke reaches the smoke vent valve 52 as indicated by arrows F3, F4. In addition, in the present embodiment, since the second smoke vent passage 36 is provided, a smoke flow indicated by arrow F4 occurs in addition to the smoke flow indicated by arrow F3. Since the effective cross-sectional area of the flow passage is large, the structure allows smoke to flow easily from the smoke generation point P1 to the smoke vent valve 52. The above description illustrates the case where a blockage point P2 occurs in the first smoke vent passage 34. However, even when no blockage point P2 is present, the presence of the second smoke vent passage 36 increases the effective cross-sectional area of the flow passage and ensures a larger flow capacity.

In the smoke vent structure 16 of the present embodiment, the first smoke vent passage 34 and the second smoke vent passage 36 have different cross-sectional shapes in a direction perpendicular to their extending direction. Accordingly, the ease with which foreign matter contained in the smoke passes through also differs between the first smoke vent passage 34 and the second smoke vent passage 36. For example, even if foreign matter that tends to clog the first smoke vent passage 34 is discharged, such foreign matter may be less likely to cause clogging in the second smoke vent passage 36. Conversely, foreign matter that tends to clog the second smoke vent passage 36 may be less likely to cause clogging in the first smoke vent passage 34. In this way, by providing the first smoke vent passage 34 and the second smoke vent passage 36 having different cross-sectional shapes, a condition can be achieved in which, even if foreign matter is discharged, at least one of the first and second smoke vent passages 34, 36 is less likely to experience obstruction of smoke flow due to clogging with the foreign matter.

Specifically, the height H4 of the reinforcing member 40 in the second smoke vent passage 36 is greater than the height H1 of the downwardly protruding portion 30 in the first smoke vent passage 34. Therefore, compared with the first smoke vent passage 34 that has a relatively low height, the second smoke vent passage 36 has a greater height, thereby providing a structure less susceptible to clogging with foreign matter. Even when the spacing between the battery modules 20 is narrow, the height of the second smoke vent passage 36 can be secured to ensure a sufficient cross-sectional area for smoke flow. Compared with the second smoke vent passage 36, the first smoke vent passage 34 has, in a cross section perpendicular to its extending direction, a flattened shape elongated in the vehicle width direction. Accordingly, in the first smoke vent passage 34, a sufficient cross-sectional area for smoke flow can be ensured with a low height.

In addition, the second smoke vent passage 36 has a cross-sectional shape closer to a square than the first smoke vent passage 34. Since the cross-sectional shape is closer to a square, the second smoke vent passage 36 is less likely to become clogged with foreign matter than the first smoke vent passage 34.

The second smoke vent passage 36 is located above the lower surfaces of the battery cells 22. Accordingly, compared with a configuration in which the second smoke vent passage 36 is positioned below the lower surfaces of the battery cells 22, the second smoke vent passage 36 is less likely to come into contact with foreign objects from the road surface etc., thereby suppressing damage to the second smoke vent passage 36 caused by such contact.

Each battery module 20 is configured as a row of battery cells 22 aligned in the vehicle front-rear direction, and the downwardly protruding portions 30 that form part of the first passage member are disposed below the battery cells 22 and parallel to the rows of the battery cells 22. This configuration allows the first smoke vent passage 34 to extend across the battery cells 22.

Each reinforcing member 40 is disposed between adjacent battery modules 20, that is, between adjacent rows of battery cells 22. The space between the battery modules 20 can thus be effectively utilized to arrange the second smoke vent passage 36. In particular, by closing the open lower portion of each reinforcing member 40 with the cell base 44, the internal spaces of the reinforcing members 40 can be used to form the second smoke vent passage 36, which also improves space efficiency. By securely closing the lower side of each reinforcing member 40 with the cell base 44, leakage of smoke from the second smoke vent passage 36 can be suppressed.

Each reinforcing member 40 extends along substantially the entire length of the corresponding battery module 20 in the vehicle front-rear direction. Accordingly, the reinforcing members 40 reinforce the battery modules 20, each including the battery cells 22 arranged in rows, along the direction in which the battery cells 22 are aligned.

Since each reinforcing member 40 has a hat-shaped cross section in the vehicle width direction, it can provide sufficient rigidity (bending stiffness) compared with a flat plate-like member. Furthermore, each reinforcing member 40 also serves as the second passage member. That is, since the second passage member can be formed by effectively using the internal space of the reinforcing member 40, there is no need to use an additional member for forming the second passage member, thereby suppressing an increase in the number of parts.

In the smoke vent structure 16 of the present embodiment, the second smoke vent passage 36 is formed by the reinforcing member 40 and the cell base 44. The cell base 44 is configured as part of the lower case 24. Since the lower case 24 also serves as the cell base 44, an increase in the number of parts can be suppressed compared with a configuration in which the cell base 44 is provided separately from the lower case 24.

Moreover, since the lower case 24 has cell bases 44 formed at positions corresponding to the respective reinforcing members 40, the cell bases 44 can be formed using a common lower case 24 for the reinforcing members 40, thereby suppressing an increase in the number of parts.

Since the cell base 44 closes the lower side of the reinforcing member 40, leakage of smoke from the second smoke vent passage 36 that is formed by the reinforcing member 40 and the cell base 44 can be suppressed.

In the smoke vent structure 16 of the present embodiment, each reinforcing member 40 is disposed in the gap GP5 between adjacent battery modules 20. The front end 40A and rear end 40B of each reinforcing member 40 are joined to the lower case 24 via the joining members 42. Accordingly, the battery case 28 can be reinforced by the reinforcing members 40.

Openings at the front end 40A and rear end 40B of each reinforcing member 40 communicate with the respective gaps GP2 (which form part of the first smoke vent passage 34) defined between the lower case 24 and the respective joining members 42. Accordingly, the smoke that has entered the first smoke vent passage 34 also flows through the interior of the reinforcing members 40. Each space surrounded by the reinforcing member 40 and the cell base 44 functions as part of the smoke vent passage 32. In other words, the interior of each reinforcing member 40 can be effectively used as the second smoke vent passage 36.

The lower case 24 houses the battery modules 20, and each battery module 20 includes a plurality of battery cells 22. That is, the lower case 24 can keep the battery cells 22 housed together as an integral assembly. Since the lower case 24 constitutes part of the first passage member, an increase in the number of parts can be suppressed compared with a configuration in which the first passage member is provided separately from the lower case 24.

The following are appendices related to the present disclosure.

### Appendix 1

A smoke vent structure including:
a first passage member that defines a first smoke vent passage, the first smoke vent passage constituting part of a smoke vent passage through which smoke generated in a battery cell flows; and
a second passage member that defines a second smoke vent passage, the second smoke vent passage bypassing part of the first smoke vent passage and having, in a cross section perpendicular to an extending direction, a cross-sectional shape different from a cross-sectional shape of the first smoke vent passage.

### Appendix 2

The smoke vent structure according to Appendix 1, wherein:
a plurality of the battery cells is arranged in a plurality of rows;
the first passage member is disposed below the battery cells and parallel with the rows; and the second passage member is disposed between the rows.

### Appendix 3

The smoke vent structure according to Appendix 1 or 2, wherein the first smoke vent passage has, in a cross section perpendicular to an extending direction, a shape in which a cross-sectional height is greater than a cross-sectional width.

### Appendix 4

The smoke vent structure according to Appendix 3, wherein the second smoke vent passage has, in a cross section perpendicular to the extending direction, a cross-sectional height greater than the cross-sectional height of the first smoke vent passage.

### Appendix 5

The smoke vent structure according to Appendix 3 or 4, wherein the second smoke vent passage has, in a cross section perpendicular to the extending direction, a cross-sectional width narrower than the cross-sectional width of the first smoke vent passage.

## Claims

1. A smoke vent structure comprising:
a first passage member that defines a first smoke vent passage, the first smoke vent passage constituting part of a smoke vent passage through which smoke generated in a battery cell flows; and
a second passage member that defines a second smoke vent passage, the second smoke vent passage bypassing part of the first smoke vent passage and having, in a cross section perpendicular to an extending direction, a cross-sectional shape different from a cross-sectional shape of the first smoke vent passage.

2. The smoke vent structure according to claim 1, wherein:
a plurality of the battery cells is arranged in a plurality of rows;
the first passage member is disposed below the battery cells and parallel with the rows; and
the second passage member is disposed between the rows.

3. The smoke vent structure according to claim 1, wherein the first smoke vent passage has, in a cross section perpendicular to an extending direction, a shape in which a cross-sectional height is greater than a cross-sectional width.

4. The smoke vent structure according to claim 3, wherein the second smoke vent passage has, in a cross section perpendicular to the extending direction, a cross-sectional height greater than the cross-sectional height of the first smoke vent passage.

5. The smoke vent structure according to claim 3, wherein the second smoke vent passage has, in a cross section perpendicular to the extending direction, a cross-sectional width narrower than the cross-sectional width of the first smoke vent passage.
